# EUROPEAN PATENT APPLICATION

(11) **EP 4 408 030 A1**
(43) Date of publication of application: **31.07.2024**
(21) Application number: 24151125.2
(22) Date of filing: 10.01.2024
(51) Int. Cl.: H04S 7/00, H04M 3/56

(54) **APPARATUS AND METHODS FOR COMMUNICATION AUDIO GROUPING AND POSITIONING**

(30) Priority: 26.01.2023 GB 202301108
(71) Applicant: Nokia Technologies Oy, 02610 Espoo (FI)
(72) Inventor: ERONEN, Antti Johannes, Tampere (FI); VILERMO, Miikka Tapani, Siuro (FI); LEHTINIEMI, Arto Juhani, Lempäälä (FI)
(74) Representative: Nokia EPO representatives

(57) **Abstract**

A method for generating spatial reproduction of communication audio, the method comprising: obtaining at least one communication audio signal from at least one communication channel; obtaining at least one acoustic parameter based on the at least one communication audio signal; obtaining a spatial audio position at least in part based on the at least one acoustic feature parameter; and generating the spatial reproduction of communication audio using the spatial audio position while the at least one communication channel is in use.

## Description

### Field

The present application relates to apparatus and methods for communication audio grouping and positioning based on background audio content, but not exclusively for communication audio grouping and positioning based on background audio content within parametric spatial audio rendering.

### Background

3rd Generation Partnership Project (3GPP) Immersive Voice and Audio Services (IVAS) is expected to bring an object and ambience audio representation to mobile communications. Object audio signals are typically able to represent both a user's speech component and any ambience component within an audio scene around the capture device.

The use of 3GPP IVAS can be employed in communication systems, such as rendering of communication audio based on 3GPP IVAS, or social Virtual Reality (VR) such as MPEG-I Audio Phase 2 or ISO/IEC 23090-4.

There are known methods and systems for spatializing conference call participant voices in an immersive telecommunication system or in a mobile phone. Such methods and systems are generally capable of playing back immersive communication signals, where the participants in a teleconference system are provided spatial positions around a listener so that a listener is able to hear the voices of other participants or audio sources originating from different spatial positions.

### Summary

According to a first aspect there is provided a method for generating spatial reproduction of communication audio, the method comprising: obtaining at least one communication audio signal from at least one communication channel; obtaining at least one acoustic parameter based on the at least one communication audio signal; obtaining a spatial audio position at least in part based on the at least one acoustic feature parameter; and generating the spatial reproduction of communication audio using the spatial audio position while the at least one communication channel is in use.

Obtaining a spatial audio position may comprise determining an updated spatial position where the updated spatial position is independent of an input spatial position of the communication audio signal.

Obtaining a spatial audio position may comprise determining an updated spatial position where the updated spatial position is at least in part further based on an input spatial position of the communication audio signal

The method may further comprise receiving the input spatial position of the communication audio signal from the at least one communication channel.

The method may further comprise updating the input spatial position of the communication audio signal further based on the at least one acoustic parameter.

The method may further comprise determining the input spatial position of the communication audio signal based on analysing the at least one communication audio signal.

The at least one acoustic parameter may relate to a background audio characteristic of the at least one communication audio signal.

The spatial reproduction of communication audio may assist in the generation of an immersive communication audio scene.

According to a second aspect there is provided an apparatus for generating spatial reproduction of communication audio, the apparatus comprising means configured to: obtain at least one communication audio signal from at least one communication channel; obtain at least one acoustic parameter based on the at least one communication audio signal; obtain a spatial audio position at least in part based on the at least one acoustic feature parameter; and generate the spatial reproduction of communication audio using the spatial audio position while the at least one communication channel is in use.

The means configured to obtain a spatial audio position may be configured to determine an updated spatial position where the updated spatial position is independent of an input spatial position of the communication audio signal.

The means configured to obtain a spatial audio position may be configured to determine an updated spatial position where the updated spatial position is at least in part further based on an input spatial position of the communication audio signal.

The means may be further configured to receive the input spatial position of the communication audio signal from the at least one communication channel.

The means may be further configured to update the input spatial position of the communication audio signal further based on the at least one acoustic parameter.

The means may be further configured to determine the input spatial position of the communication audio signal based on analysing the at least one communication audio signal.

The at least one acoustic parameter may relates to a background audio characteristic of the at least one communication audio signal.

The spatial reproduction of communication audio may assist in the generation of an immersive communication audio scene.

According to a third aspect there is provided an apparatus for generating spatial reproduction of communication audio, the apparatus comprising at least one processor and at least one memory storing instructions that, when executed by the at least one processor, cause the system at least to perform: obtaining at least one communication audio signal from at least one communication channel; obtaining at least one acoustic parameter based on the at least one communication audio signal; obtaining a spatial audio position at least in part based on the at least one acoustic feature parameter; and generating the spatial reproduction of communication audio using the spatial audio position while the at least one communication channel is in use.

The apparatus caused to perform obtaining a spatial audio position may further be caused to perform determining an updated spatial position where the updated spatial position is independent of an input spatial position of the communication audio signal.

The apparatus caused to perform obtaining a spatial audio position may further be caused to perform determining an updated spatial position where the updated spatial position is at least in part further based on an input spatial position of the communication audio signal

The apparatus may be further caused to perform receiving the input spatial position of the communication audio signal from the at least one communication channel.

The apparatus may be further caused to perform updating the input spatial position of the communication audio signal further based on the at least one acoustic parameter.

The apparatus may be further caused to perform determining the input spatial position of the communication audio signal based on analysing the at least one communication audio signal.

The at least one acoustic parameter may relate to a background audio characteristic of the at least one communication audio signal.

The spatial reproduction of communication audio may assist in the generation of an immersive communication audio scene.

According to a fourth aspect there is provided an apparatus for generating spatial reproduction of communication audio, the apparatus comprising: generating spatial reproduction of communication audio signals, the apparatus comprising: obtaining circuitry configured to obtain at least one communication audio signal from at least one communication channel; obtaining circuitry configured to obtain at least one acoustic parameter based on the at least one communication audio signal; obtaining circuitry configured to obtain a spatial audio position at least in part based on the at least one acoustic feature parameter; and generating circuitry configured to generate the spatial reproduction of communication audio using the spatial audio position while the at least one communication channel is in use.

According to a fifth aspect there is provided a computer program comprising instructions [or a computer readable medium comprising instructions] for causing an apparatus, for generating spatial reproduction of communication audio, the apparatus caused to perform at least the following: obtaining at least one communication audio signal from at least one communication channel; obtaining at least one acoustic parameter based on the at least one communication audio signal; obtaining a spatial audio position at least in part based on the at least one acoustic feature parameter; and generating the spatial reproduction of communication audio using the spatial audio position while the at least one communication channel is in use.

According to a sixth aspect there is provided a non-transitory computer readable medium comprising program instructions for causing an apparatus, for generating spatial reproduction of communication audio, to perform at least the following: obtaining at least one communication audio signal from at least one communication channel; obtaining at least one acoustic parameter based on the at least one communication audio signal; obtaining a spatial audio position at least in part based on the at least one acoustic feature parameter; and generating the spatial reproduction of communication audio using the spatial audio position while the at least one communication channel is in use.

According to a seventh aspect there is provided an apparatus, for generating spatial reproduction of communication audio, comprising: means for obtaining at least one communication audio signal from at least one communication channel; means for obtaining at least one acoustic parameter based on the at least one communication audio signal; means for obtaining a spatial audio position at least in part based on the at least one acoustic feature parameter; and means for generating the spatial reproduction of communication audio using the spatial audio position while the at least one communication channel is in use.

According to an eighth aspect there is provided a computer readable medium comprising instructions for causing an apparatus, for generating spatial reproduction of communication audio, to perform at least the following: obtaining at least one communication audio signal from at least one communication channel; obtaining at least one acoustic parameter based on the at least one communication audio signal; obtaining a spatial audio position at least in part based on the at least one acoustic feature parameter; and generating the spatial reproduction of communication audio using the spatial audio position while the at least one communication channel is in use.

An apparatus comprising means for performing the actions of the method as described above.

An apparatus configured to perform the actions of the method as described above.

A computer program comprising program instructions for causing a computer to perform the method as described above.

A computer program product stored on a medium may cause an apparatus to perform the method as described herein.

An electronic device may comprise apparatus as described herein.

A chipset may comprise apparatus as described herein.

Embodiments of the present application aim to address problems associated with the state of the art.

### Summary of the Figures

For a better understanding of the present application, reference will now be made by way of example to the accompanying drawings in which:
Figure 1 shows schematically an example system of playback of spatial audio signals suitable for implementing some embodiments;
Figure 2 shows a flow diagram of the operation of the example system of playback of spatial audio signals capture apparatus shown in Figure 1 according to some embodiments;
Figure 3 shows schematically an example communication audio signal content analyser as shown in Figure 1 according to some embodiments;
Figure 4 shows a flow diagram of the operation of the example communication audio signal content analyser shown in Figure 3 according to some embodiments
Figure 5 shows schematically an example communication audio signal spatial position determiner as shown in Figure 1 suitable for implementing some embodiments;
Figure 6 shows a flow diagram of the operation of the example communication audio signal spatial position determiner shown in Figure 5 according to some embodiments;
Figure 7 shows schematically a spatializer as shown in Figure 1 according to some embodiments;
Figure 8 shows a flow diagram of the of the operation of the example spatializer shown in Figure 7 according to some embodiments;
Figure 9 shows schematically a suitable implementation of the example shown in Figure 1 according to some embodiments; and
Figure 10 shows schematically example electronic apparatus suitable for implementing some embodiments.

### Embodiments of the Application

The following describes in further detail suitable apparatus and possible mechanisms for the rendering of suitable output audio signals during communication applications.

As discussed above there exists methods and systems for spatializing conference call participant voices or audio sources in an immersive telecommunication system or in a mobile phone. Such methods and systems are generally capable of playing back immersive communication signals, where the participants in a teleconference call are provided spatial positions around a listener so that the listener hears the other participants voices or other audio from originating from different spatial positions.

However, the spatial positioning of different speaker voices is typically more or less arbitrary in conventional systems. Although this may be acceptable for the listener in situations where the audio sources (voices) are relatively dry (in other words lacking significant echo and reverberation) and noise free, if the arriving communication audio voice signals contain background noise and/or ambient signals, then this can lead to suboptimal user experience. For example communication audio signals having very different background audio characteristics when rendered at different parts of the spatial audio scene produce poor quality audio reproduction, since this rendering can create a confusing and complex spatial audio scene for the listener. The concept as discussed herein is one where apparatus and methods are able to automatically and adaptively arrange the spatial audio positions of communication audio signals based on their background audio characteristics such so that the spatial audio scene is less confusing for the user.

Specifically the embodiments as discussed herein relate to spatial reproduction of communication audio signals, where apparatus and methods are proposed that enables selective repositioning of communication audio signals for spatial audio reproduction based on their background audio characteristics to create a minimally confusing audio scene for a listener. This can be implemented by obtaining at least one communication audio signal, and determining acoustic features from the communication audio signal relating to its background audio characteristics. Then based on the determined acoustic features, obtaining a spatial audio position for the at least one communication audio signal and rendering an immersive communication audio scene using the at least one communication signal and the obtained spatial position.

In some embodiments, the apparatus or methods are configured to determine or calculate features or parameters associated with reverberance, noisiness, noise annoyance, speech masking, background context (environment), and/or the spatial energy distribution from the communication audio signal and from these obtain, determine or select a spatial position from a set of predetermined spatial positions related to at least one of reverberance, noisiness, noise annoyance, speech masking and background context. For example, a present configuration in the system may indicate that communication audio signals containing street noise should be rendered from the front.

In some environments, there are several active communication audio signals and the apparatus or method is configured to determine or calculate the features from each of the signals and update the spatial positions such that signals having similar features are provided with close spatial positions with respect to each other and signals having dissimilar features are spatially positioned further apart from each other.

In some further embodiments, the apparatus and methods are configured to group active communication audio signals that have similar features close to each other and arrange the audio signals within a group based on the values of their features. For example, communication audio signals having street ambience as background will be grouped with a close spatial position, and such that the noisiest signals are in one end (region) of the group and the least noisy signals in the other end (opposing region). As another example, quiet signals can be grouped and positioned away from the noisy signals since they have low value for noisiness and speech masking.

In some embodiments, the apparatus and methods are configured to perform additional acoustic effect processing to communication audio signals based on the values of the features. For example, if a communication audio signal has a high value for reverberance then a determination not to add artificial reverberation can be performed. Correspondingly a determination to apply artificial reverberation processing can be made when a communication audio signal has a low value for reverberance.

The application of the embodiments as discussed herein in further detail aims to create less confusing audio scenes in rendering several communication audio signals to the user. This is because the embodiments aim to group similar background ambiences close to each other and within a group arrange the communication audio signals based on the similarity of their acoustic features creating a less confusing audio experience.

The embodiments as discussed herein are related to MPEG-I Audio Phase 2 requirements on Social VR. Their aim is to define an interface which will enable rendering of audio from external communication audio codecs (e.g., 3GPP EVS/IVAS or earlier) using the MPEG-I VR audio renderer. It is envisioned that MPEG-I will define an interface using which external communication audio and associated position data can be rendered within the MPEG-I VR audio scene. The apparatus and methods presented in the following embodiments can be considered as potential extensions which would enable dynamic repositioning of communication audio within the MPEG-I VR world based on the content of the communication audio arriving through the standardized interface.

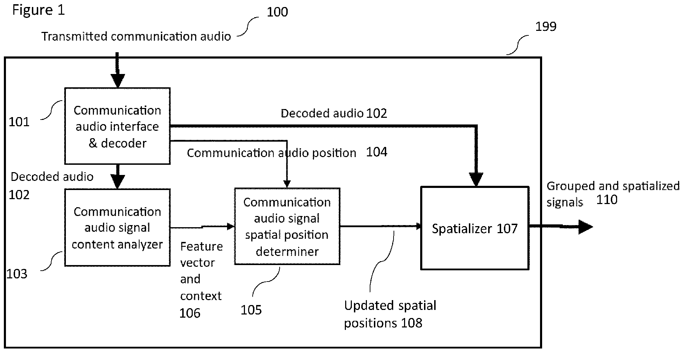

Figure 1 depicts an example apparatus 199 which is suitable for implementing some embodiments. The apparatus 199 is configured to receive the communication audio (CA) 100 and generate and output grouped and spatialized signals 110. The communication audio (CA) 100 can be carried in any suitable format, such as 3GPP EVS or IVAS.

In some embodiments the apparatus 199 comprises a communication audio interface and decoder 101. The communication audio interface and decoder 101 is configured to receive the communication audio via any suitable network link, such as 4G or 5G mobile network connection, and is configured to implement a suitable communication audio decoder function to decode audio samples of the communication audio.

In some embodiments, the communication audio (CA) 100 can carry spatial position information for the communication audio either as multiplexed metadata within the communication audio stream, or as a separately signalled metadata stream using any suitable signalling and transmission mechanism. Such communication audio position information can in some embodiments relate to a position (global or relative) of the capture device configured to capture and encode the communication audio signal (or transmitter device). In some embodiments the spatial position information values are carried as cartesian (x, y, z) or polar (azimuth, elevation, radius) coordinates.

In some embodiments the spatial position information comprises pose data or information containing an orientation value or values associated with the communication audio (CA) signal.

The decoded audio signals 102 and the communication audio position information 104 can be output from the communication audio interface and decoder 101.

In some embodiments the apparatus 199 comprises a communication audio signal content analyzer 103. The communication audio signal content analyzer 103 is configured to receive the decoded audio signal 102 and based on the decoded audio signals 103 produce a feature vector 106 characterizing the content of the communication audio signal. In some embodiments the feature vector 106 is configured to characterize background audio content of the communication audio signals.

In some embodiments the apparatus 199 comprises a communication audio signal spatial position determiner 105. The communication audio signal spatial position determiner 105 is configured to receive the feature vector 106 from the communication audio signal content analyzer 106. Optionally, in some embodiments, and where the CA has incoming position data then the communication audio position information 104 is also provided to the communication audio signal spatial position determiner 105.

The communication audio signal spatial position determiner 105 is configured to use the feature vector 106 (and the optional communication audio position information 104) to determine updated spatial positions 108 for the communication audio signals (which may be one or more than one). The communication audio spatial position determiner 105 in some embodiments is configured to group signals having close feature values to 'close' spatial positions.

In some embodiments the apparatus 199 comprises a spatializer 107 configured to obtain the updated spatial positions 108 and the decoded audio signals 102, which is configured to render grouped and spatialized audio signals 110 where the communication audio signals are 'located' at the positions corresponding to updated spatial positions, thus reflecting the grouping performed by communication audio spatial position determiner 105.

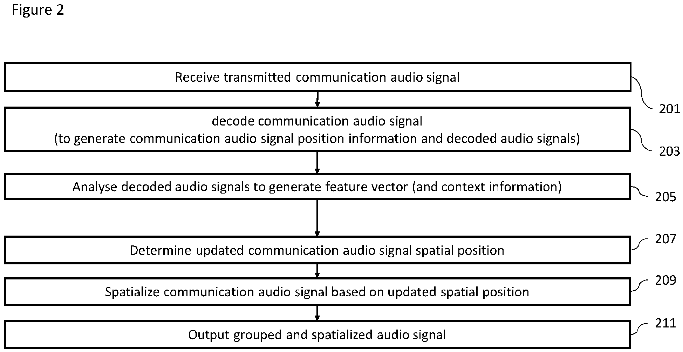

With respect to Figure 2 is shown a flow diagram of the operation of the apparatus shown in Figure 1. Thus, a first operation is shown in Figure 2 by 201 of the operation of receiving the transmitted communication audio.

Then is shown in Figure 2 by 203 the operation of decoding communication audio signals (to generate communication audio signal position information where available and decoded audio signals).

Having obtained decoded audio signals these are analysed to generate feature vectors (and context information where implemented) as shown in Figure 2 by 205.

Then a determination of an updated communication audio signal spatial position is performed as shown in Figure 2 by 207.

The communication audio signal is spatialized based on the updated spatial position as shown in Figure 2 by 209.

Finally the spatialized audio signals is output as shown in Figure 2 by 211.

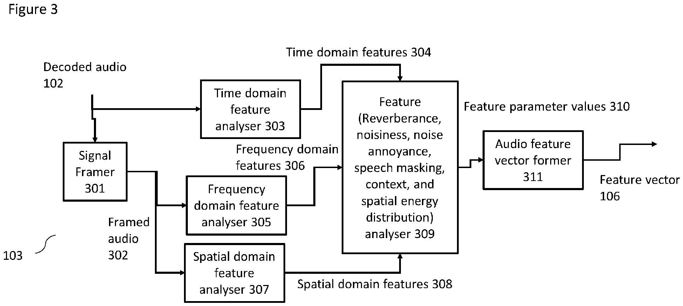

Figure 3 shows in further detail a schematic view of the communication audio signal content analyzer 103. In this example embodiment the communication audio signal content analyzer 103 is configured to analyze the communication audio signal to determine time domain, frequency domain, and spatial domain features from the audio signal.

Thus for example the communication audio signal content analyzer 103 comprises a time domain feature analyser 303 configured to receive the decoded audio signal 202 and analyse the decoded audio signal 202 in the time domain to determine time domain features 304. Examples of time domain features 304 include number of zero crossings, skewness, kurtosis, energy, and other suitable measures of signal sample statistics. Various frequency and time domain audio features have been described in Eronen: "Signal Processing Methods for Audio Classification and Music Content Analysis", doctoral thesis, Tampere University of Technology, available at https://trepo.tuni.fi/handle/10024/114712.

These time domain features 304 can then be output.

In some embodiments the communication audio signal content analyzer 103 comprises a signal framer 301 which is configured to generate frames of audio signals 302.

The communication audio signal content analyzer 103 in some embodiments comprises a frequency domain feature analyser 305 which configured to receive the framed audio signal 302 and to apply a time-frequency domain transformation and to analyse the framed audio signal 302 in the frequency domain to determine frequency domain features 306. Examples of frequency domain features 306 include mel-frequency cepstral coefficients, spectral slope, and log spectral distortion. These determined frequency domain features 306 can be output.

The communication audio signal content analyzer 103 in some embodiments comprises a spatial domain feature analyser 307 configured to receive the framed audio signal 302 and to apply a time-frequency domain transformation (when needed) and to analyse the framed audio signal 302 in the frequency domain to determine spatial domain features 308. Examples of spatial domain features 308 include the steered-response power, direction of arrival, diffuseness, and energy ratio. These determined spatial domain features 308 can then be output.

Furthermore the communication audio signal content analyzer 103 in some embodiments comprises feature analyser 309 or a reverberance, noisiness, noise annoyance, speech masking, context and spatial energy distribution analyser 309. The reverberance, noisiness, noise annoyance, speech masking, context and spatial energy distribution analyser 309 is configured to receive the time domain features 304, frequency domain features 306, and spatial domain features 308 and from these generate feature parameter values such as reverberance, noisiness, noise annoyance, amount of speech masking, context, and spatial energy distribution from the signals.

For example large amount of reverberation (long reverberation times and/or high levels of reverberation) can be determined by high amplitude and slow decaying signal values after impulsive sounds are detected within the signal.

In some embodiments the context of the audio signal can be determined (or classified) based on frequency domain audio signal features. Any suitable classifier such as a neural network, support vector machine or Bayesian classifier can be used to compare the feature vectors against stored models or templates of features from known environment classes (such as street, restaurant, park, and so on) and to choose the most probable context category.

In some further embodiments a noisiness can be analyzed, for example, based on signal energy or its root mean square power.

The speech masking can be analyzed, in some embodiments, based on a masking model by determining how much noise frequency components mask speech frequency components.

Furthermore in some embodiments a noise annoyance can be measured by taking into factors such as spectral and temporal auditory masking and level-dependent frequency weighting.

Additionally a spatial energy distribution can be analyzed, for example, in some embodiments by determining spatial regions corresponding to high values in a steered-response power, which can be obtained via ambisonics beamforming.

These determined feature parameters can then be output to an audio feature vector former 311.

Furthermore the communication audio signal content analyzer 103 in some embodiments comprises an audio feature vector former 311 configured to obtain the feature parameter values 310 and combine them into a feature vector 106. For example, the feature values can be catenated into one feature vector. This feature vector is the output of communication audio signal content analyzer 103 and the feature values characterize the content of the CA signal, such as how noisy or reverberant it is and how distracting the noise is for the speech, and in which spatial direction the largest amount of noise energy is present.

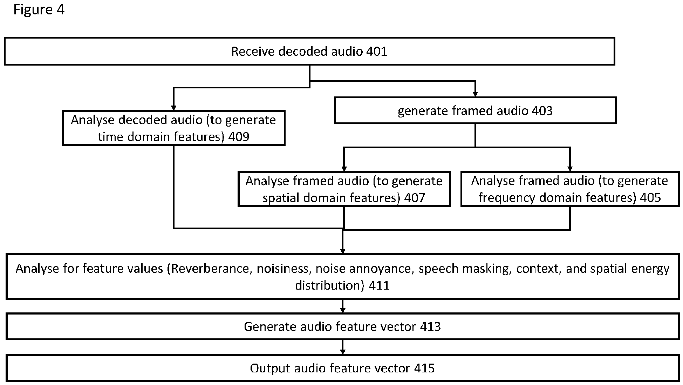

With respect to Figure 4 is shown a flow diagram of the operation of the communication audio signal content analyzer 103 shown in Figure 3. Thus a first operation is shown in Figure 4 by 401 of the operation of receiving the decoded audio.

Then is shown in Figure 4 by 403 the operation of generating framed audio from the decoded audio.

Having obtained framed audio signals these are analysed to generate frequency domain features as shown in Figure 4 by 405.

Additionally the obtained framed audio signal can be analysed to generate spatial domain features as shown in Figure 4 by 407.

Furthermore the decoded audio signals can be analysed to generate time domain features as shown in Figure 4 by 409.

Then the time domain features, frequency domain features and spatial domain features can be analysed to furthermore determine audio features as shown in Figure 4 by 411.

The determined audio features are used to generate audio feature vectors as shown in Figure 4 by 413.

Then the audio feature vectors can be output as shown in Figure 4 by 415.

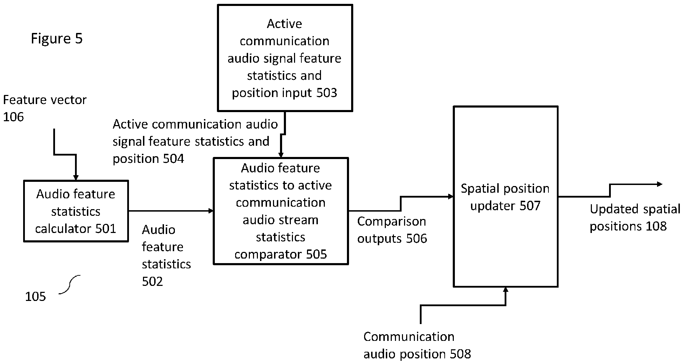

Figure 5 shows in further detail a schematic view of the communication audio signal spatial position determiner 105. In this example embodiment the communication audio signal spatial position determiner 105 is configured to determine updated spatial positions 108 based on the feature vector 106 (and further based on the communication audio position 104).

In some embodiments the communication audio signal spatial position determiner 105 comprises an audio feature statistics calculator 501. The audio feature statistics calculator 501 is configured to receive the feature vector 106 and determine statistics of the feature values over certain time segments. The audio feature vector statistics calculation can, for example, calculate running mean and variances over one second intervals of the incoming signal. The audio feature statistics 502 can be output.

Additionally the communication audio signal spatial position determiner 105 comprises an active communication audio signal feature statistics and position input 503 configured to receive and/or store the active communication audio signal feature statistics and position information 504. The active communication audio signal feature statistics and position information 504 can then be output.

In some embodiments the communication audio signal spatial position determiner 105 comprises an audio feature statistics to active communication audio stream statistics comparator 505. The Audio feature statistics to active communication audio stream statistics comparator 505 is configured to receive the audio feature statistics 502 and the communication audio signal feature statistics and position information 504 and implement a comparison between different communication audio signals. The comparison is some embodiments comprises determining Euclidean distances between the feature vector statistics vectors. In some embodiments the distances can be uniformly biased or weighted for different dimensions of the vector differences. A short distance corresponds to audio signals having similar characteristics and a large distance them having dissimilar characteristics. These distance values (comparison outputs 506) are then passed to a spatial position updater 507.

In some embodiments the communication audio signal spatial position determiner 105 comprises a spatial position updater 507. The spatial position updater 507 is configured to receive the communication audio position 508 (where available) and the comparison outputs 506 and determine spatial positions 108.

The spatial position updater 507 thus can determine spatial positions for the communication audio signals based on the comparison outputs 506 or distances. The spatial position updater 507 can therefore be configured to provide close spatial positions to communication audio signals having close pairwise distances and farther spatial positions for CA signals having large pairwise distances. In other words the audio sources or communication audio with similar features are located near to each other or otherwise grouped together. Similarly the audio sources or communication audio with different features are located further away from each other.

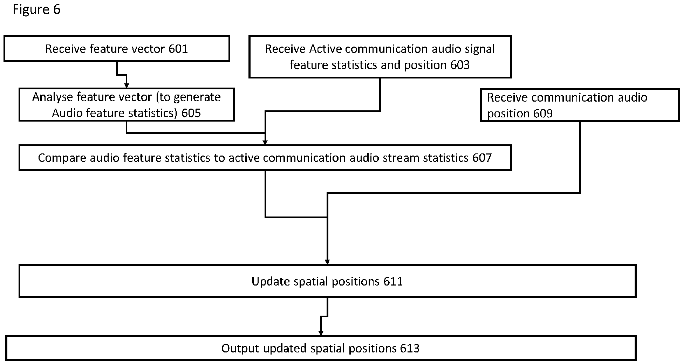

With respect to Figure 6 is shown a flow diagram of the operation of the communication audio signal spatial position determiner 105 shown in Figure 5.

Thus a first operation is shown in Figure 6 by 601 of the operation of receiving the feature vector.

The feature vector is analysed to generate the audio feature statistics as shown in Figure 6 by 605.

Additionally as shown in Figure 6 by 603 is the operation of obtaining or receiving active communication audio signal feature statistics and position.

Then there is a comparison between the audio feature statistics and active communication audio stream statistics (to determine a comparison result or difference) as shown in Figure 6 by 607.

The communication audio position can be obtained as shown in Figure 6 by 609.

The spatial positions can then be updated based on the comparison as shown in Figure 6 by 611.

The updated spatial positions can then be output as shown in Figure 6 by 613.

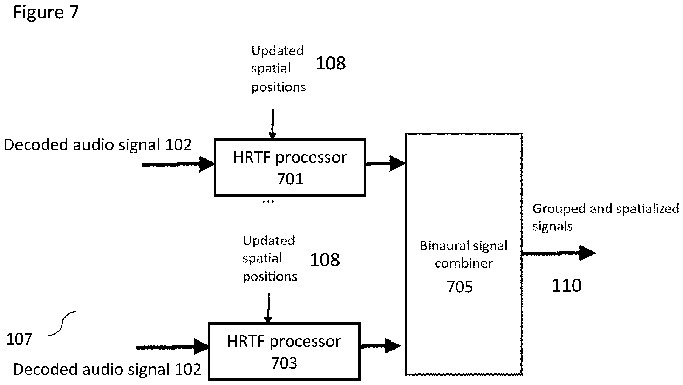

Figure 7 shows in further detail a schematic view of the spatializer 107. The spatializer 107 is configured to receive the decoded audio signal 102 and the updated spatial positions and generate grouped and spatialized signals 110. In other words the aim of the spatializer in some embodiments is to render the CA signals to the updated spatial positions around the listener.

In some embodiments the spatializer 107 comprises head related transfer function (HRTF) processors 701, 703 configured to filter each communications audio signal with a HRTF filter pair corresponding to its updated spatial position 108.

Furthermore the spatializer 107 comprises a binaural signal combiner 705 configured to combine the output of the HRTF processors and generate the grouped and spatialized signals 110. In other words the HRTF filtered signals are then combined in the binaural signal combiner 705. Combining can be implemented by summing the signals.

The output are the grouped and spatialized signals 110 where the communication signals are grouped according to their background audio characteristics and spatialized to the updated spatial positions based on the grouping.

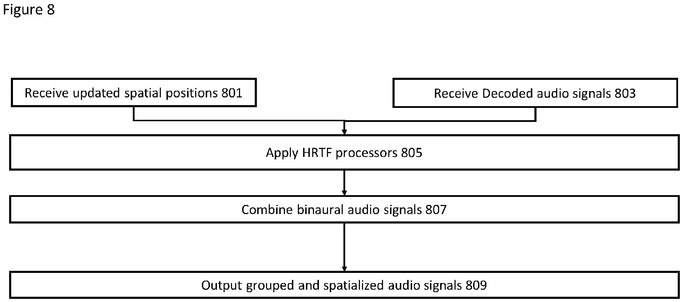

With respect to Figure 8 is shown a flow diagram of the operation of the spatializer 107 shown in Figure 7.

Thus a first operation is shown in Figure 8 by 801 of the operation of receiving the updated spatial positions 801.

Additionally as shown in Figure 8 by 803 is the operation of obtaining or receiving the decoded audio signals.

Then there is applied HRTF processor (or HRTF filter pairs) to the decoded audio signals based on the updated spatial positions as shown in Figure 8 by 805.

The binaural outputs from the HRTF processor can then be combined as shown in Figure 8 by 807.

The grouped and spatialized audio signals can then be output as shown in Figure 8 by 809.

Although not shown, there can be additional acoustic effects such as reverberation applied before HRTF processing or during it. For example in some embodiments the audio features impact the amount of acoustic effects applied on the communication audio signals. An example is applying artificial reverberation to communication audio signals having small reverberance and/or noisiness values and not applying artificial reverberation to signals having large reverberance and/or noisiness values. This enables the decoder or renderer device to avoid adding extra reverberation to already reverberant or noisy signals which would degrade their intelligibility.

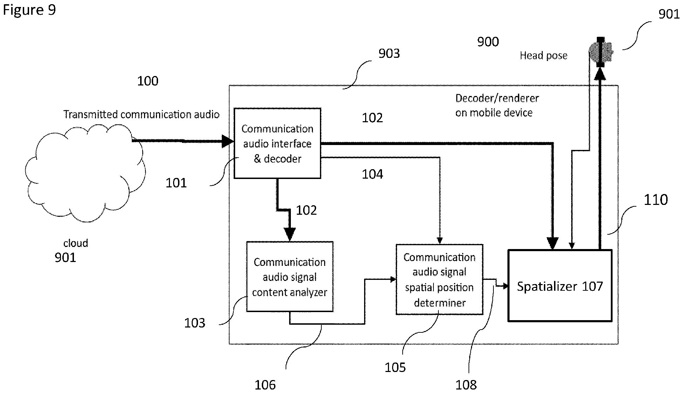

With respect to Figure 9 is shown an example apparatus 903 suitable for implementing some embodiments and depicts an example of industrial applicability of these embodiments. In some embodiments the aspects described herein can be implemented as software running on end user device such as mobile phone which renders spatialized communication audio to the user. The user can listen head tracked audio via headphones. The communication audio signals are received from network cloud and decoded on the end user device. The analysis and positioning of communication audio signals happens in this example on the end user device.

As such the apparatus 903 is configured to receive the transmitted communication audio 100 via a 'cloud' 901 network.

The apparatus is shown comprising the communication audio interface and decoder 101 and generating the decoded audio 102 and spatial position information 104, the communication audio signal content analyzer 103 generating the feature vectors 106, the communication audio signals spatial position determiner 105 receiving the feature vector 106 and the spatial position information 104 to generate the updated spatial position information 108 and the spatializer 107 configured to receive the decoded audio 102 and the updated spatial position information 108. Additionally the spatializer 107 is configured to obtain had pose information 900 from a suitable listener 901 (for example wearing a head mounted unit comprising suitable head pose sensors). The spatializer 107 is configured to output the grouped and spatialized audio signals 110 to the listener 901.

The invention can be implemented as an extension to virtual reality audio standards such as MPEG-I Audio Phase 2. In particular, MPEG-I can provide an interface to access and analyze the incoming communication audio signal. The embodiments can therefore provide updated spatial position for the communication audio signal.

In some further embodiments the analysis and positioning parts described above can be performed on edge cloud servers rather than the rendering apparatus. This is particularly suitable in situations where the participants are engaged in a teleconference (telco) call or video conference (vico) call. In these cases it can be desirable to perform the same positioning of participants for all participants and transmit this from the edge server to all callers. Furthermore in some embodiments a spatialization implementation can also be implemented in the end user device to enable individualized head tracked rendering for all callers.

In some embodiments the audio feature analysis and context classification can be implemented using a suitable analysis method such a PCA (principle component analysis) or ML (machine learning) or deep neural networks.

In some embodiments the audio feature analysis can optionally use audio beamforming and/or source separation to assist in the analysis. For example, the communications audio signal can be separated into foreground and background sound portions and the feature analysis be applied only on the background sound portion.

In some embodiments, as an alternative to spatializing each communication audio signal separately the apparatus or method can be configured to separate the communication audio signal into foreground and background signal portions. The foreground signal portions can be spatialized individually using the method such as described herein. The background signal portions of the communication audio within a group of communication audio signals obtained via clustering or other grouping can be summed to create a single background signal which is then spatialized. There can be only one summed background signal per group or several such background signals depending on the range of feature values within a group: if there is a wide variation of features such as a varying degree of noisiness then the method can use more summed background signals whereas in the case of less varying feature values fewer background signals can suffice.

Analysis of the communication audio signal can comprise many methods in addition to background sound signal analysis described above. The analysis can generally be based on looking at metadata associated with the communication audio signal or analysis of the communication audio signal itself. Analysis of metadata associated with the communication audio signal can comprise determining the identity of the person from whose device the communication audio signal originates from. An example of analysis can include whether the person is familiar or not familiar or what is his gender, or whether he is a business contact or a member of the family. Other metadata can include geographic location, time zone, affiliation (e.g., company, family), call signal quality, volume level or average volume level of speech, frequency of speech. Alternative metadata that can be analyzed from the communication audio signal include caller gender, age, mood, signal quality, and so on.

An example of the improvement which can be provided by the embodiments over a current telco (telephone conference) systems which groups communication audio signals based on metadata, which can indicate geographic location, time zone, affiliation (e.g., company, family), call signal quality, volume level or average volume level of speech, frequency of speech can be demonstrated by an arrangement of four speakers from two companies attend the call. Where from company 1, one of the speakers is in a street environment and another one in a restaurant. Also that from company 2, one of the speakers is also in a street environment and another one in a restaurant. Now, when the current telco methods are applied the same company representatives are grouped close to each other, regardless of the background audio ambience. This causes the sound scape to be a confusing mixture of street and restaurant noise. When embodiments such as described above are applied instead, the speakers in the street noise are grouped together (for example, on the left) and the speakers in the restaurant noise together (for example, on the right). Therefore, the sound scene is much easier to listen to and the conversation easier to follow.

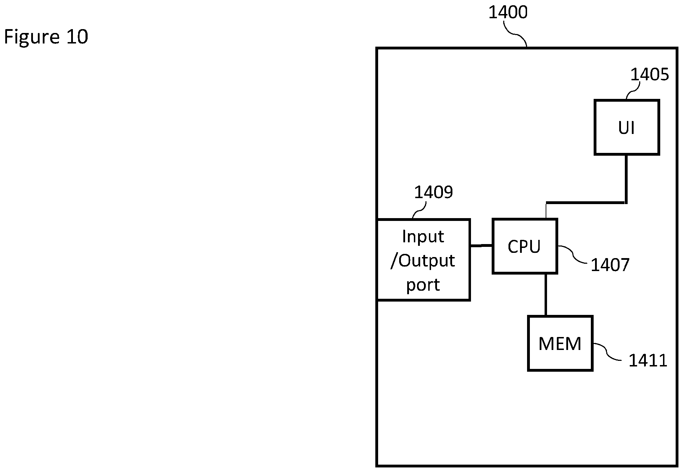

With respect to Figure 10 an example electronic device which may be used as any of the apparatus parts of the system as described above. The device may be any suitable electronics device or apparatus. For example, in some embodiments the device 1400 is a mobile device, user equipment, tablet computer, computer, audio playback apparatus, etc. The device may for example be configured to implement the encoder/analyser part and/or the decoder part as shown in Figure 1 or any functional block as described above.

In some embodiments the device 1400 comprises at least one processor or central processing unit 1407. The processor 1407 can be configured to execute various program codes such as the methods such as described herein.

In some embodiments the device 1400 comprises at least one memory 1411. In some embodiments the at least one processor 1407 is coupled to the memory 1411. The memory 1411 can be any suitable storage means. In some embodiments the memory 1411 comprises a program code section for storing program codes implementable upon the processor 1407. Furthermore, in some embodiments the memory 1411 can further comprise a stored data section for storing data, for example data that has been processed or to be processed in accordance with the embodiments as described herein. The implemented program code stored within the program code section and the data stored within the stored data section can be retrieved by the processor 1407 whenever needed via the memory-processor coupling.

In some embodiments the device 1400 comprises a user interface 1405. The user interface 1405 can be coupled in some embodiments to the processor 1407. In some embodiments the processor 1407 can control the operation of the user interface 1405 and receive inputs from the user interface 1405. In some embodiments the user interface 1405 can enable a user to input commands to the device 1400, for example via a keypad. In some embodiments the user interface 1405 can enable the user to obtain information from the device 1400. For example the user interface 1405 may comprise a display configured to display information from the device 1400 to the user. The user interface 1405 can in some embodiments comprise a touch screen or touch interface capable of both enabling information to be entered to the device 1400 and further displaying information to the user of the device 1400. In some embodiments the user interface 1405 may be the user interface for communicating.

In some embodiments the device 1400 comprises an input/output port 1409. The input/output port 1409 in some embodiments comprises a transceiver. The transceiver in such embodiments can be coupled to the processor 1407 and configured to enable a communication with other apparatus or electronic devices, for example via a wireless communications network. The transceiver or any suitable transceiver or transmitter and/or receiver means can in some embodiments be configured to communicate with other electronic devices or apparatus via a wire or wired coupling.

The transceiver can communicate with further apparatus by any suitable known communications protocol. For example in some embodiments the transceiver can use a suitable radio access architecture based on long term evolution advanced (LTE Advanced, LTE-A) or new radio (NR) (or can be referred to as 5G), universal mobile telecommunications system (UMTS) radio access network (UTRAN or E-UTRAN), long term evolution (LTE, the same as E-UTRA), 2G networks (legacy network technology), wireless local area network (WLAN or Wi-Fi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs), cellular internet of things (IoT) RAN and Internet Protocol multimedia subsystems (IMS), any other suitable option and/or any combination thereof.

The transceiver input/output port 1409 may be configured to receive the signals.

In some embodiments the device 1400 may be employed as at least part of the synthesis device. The input/output port 1409 may be coupled to headphones (which may be a headtracked or a non-tracked headphones) or similar and loudspeakers.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general-purpose computers, special purpose computers, microprocessors, digital signal processors (DSPs), application specific integrated circuits (ASIC), gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and

I hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device. The term "non-transitory," as used herein, is a limitation of the medium itself (i.e., tangible, not a signal ) as opposed to a limitation on data storage persistency (e.g., RAM vs. ROM).

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. An apparatus for generating spatial reproduction of communication audio, the apparatus comprising means configured to:
obtain at least one communication audio signal from at least one communication channel;
obtain at least one acoustic parameter based on the at least one communication audio signal;
obtain a spatial audio position at least in part based on the at least one acoustic feature parameter; and
generate the spatial reproduction of communication audio using the spatial audio position while the at least one communication channel is in use.

2. The apparatus as claimed in claim 1, wherein the means configured to obtain the spatial audio position is configured to determine an updated spatial position where the updated spatial position is one of:
independent of an input spatial position of the communication audio signal; and
at least in part further based on the input spatial position of the communication audio signal.

3. The apparatus as claimed in claim 2, wherein the means are further configured to receive the input spatial position of the communication audio signal from the at least one communication channel.

4. The apparatus as claimed in any of claim 2 or 3, wherein the means are further configured to at least one of:
determine the input spatial position of the communication audio signal based on analysing the at least one communication audio signal; and
update the input spatial position of the communication audio signal further based on the at least one acoustic parameter.

5. The apparatus as claimed in any of claims 2 to 4, wherein the at least one acoustic parameter relates to a background audio characteristic of the at least one communication audio signal.

6. The apparatus as claimed in any of claims 2 to 5, wherein the spatial reproduction of communication audio assists in the generation of an immersive communication audio scene.

7. The apparatus as claimed in any of claims 1 to 6, wherein the obtained at least one communication audio signal comprises a plurality of communication audio signals and the means are further configured to determine respective at least one acoustic parameter from each communication audio signal to update respective spatial audio position of each communication audio signal.

8. The apparatus as claimed in any of claims 1 to 7, wherein the means are further configured to at least one of:
group communication audio signals that have similar at least one acoustic parameter close to each other;
provide the communication audio signals of the group with close spatial audio positions with respect to each other; and
provide communication audio signals having dissimilar at least one acoustic parameter that are spatially positioned further apart from each other.

9. A method for generating spatial reproduction of communication audio, the method comprising:
obtaining at least one communication audio signal from at least one communication channel;
obtaining at least one acoustic parameter based on the at least one communication audio signal;
obtaining a spatial audio position at least in part based on the at least one acoustic feature parameter; and
generating the spatial reproduction of communication audio using the spatial audio position while the at least one communication channel is in use.

10. The method as claimed in claim 9, wherein obtaining the spatial audio position comprises determining an updated spatial position where the updated spatial position is one of:
receiving an input spatial position of the communication audio signal from the at least one communication channel;
independent of the input spatial position of the communication audio signal; and
at least in part further based on the input spatial position of the communication audio signal.

11. The method as claimed in claim 10, further comprising at least one of:
determining the input spatial position of the communication audio signal based on analysing the at least one communication audio signal; and
updating the input spatial position of the communication audio signal further based on the at least one acoustic parameter.

12. The method as claimed in any of claims 9 to 11, wherein the at least one acoustic parameter relates to a background audio characteristic of the at least one communication audio signal.

13. The method as claimed in any of claims 9 to 12, wherein the spatial reproduction of communication audio assists in the generation of an immersive communication audio scene.

14. The method as claimed in any of claims 9 to 13, wherein obtaining the at least one communication audio signal comprises a plurality of communication audio signals and the method further comprises determining respective at least one acoustic parameter from each communication audio signal to update respective spatial audio position of each communication audio signal.

15. The method as claimed in any of claims 9 to 14, further comprises at least one of:
grouping communication audio signals that have similar at least one acoustic parameter close to each other;
providing the communication audio signals of the group with close spatial audio positions with respect to each other; and
providing communication audio signals having dissimilar at least one acoustic parameter that are spatially positioned further apart from each other.
